Europäisches Patentamt

European Patent Office

Office européen des brevets

(11) Veröffentlichungsnummer: **0 228 566**
**B1**

(12) **EUROPÄISCHE PATENTSCHRIFT**

(45) Veröffentlichungstag der Patentschrift:
02.05.90

(21) Anmeldenummer: 86116289.9

(22) Anmeldetag: 24.11.86

(51) Int. Cl.⁴: **H01M 2/18**

(54) **Säureauslaufsicherer Akkumulator.**

(30) Priorität: 06.12.85 DE 3543617

(43) Veröffentlichungstag der Anmeldung:
15.07.87 Patentblatt 87/29

(45) Bekanntmachung des Hinweises auf die Patenterteilung:
02.05.90 Patentblatt 90/18

(84) Benannte Vertragsstaaten:
AT BE CH DE ES FR GB IT LI LU NL SE

(56) Entgegenhaltungen:
FR-A- 2 540 674
GB-A- 2 070 844
GB-A- 2 160 701
US-A- 3 944 435
US-A- 4 068 047

(73) Patentinhaber: HAGEN Batterie AG,
Thomästrasse 27/28, D-4770 Soest(DE)

(72) Erfinder: Böhle, Christian, Dr., Postgasse 6,
D-4770 Soest(DE)
Erfinder: Nann, Eberhard, Dr., Schmückersweg 2,
D-4770 Soest-Deiringsen(DE)
Erfinder: Römling, Ulrich, Dipl.-Ing., Milchstrasse 10,
D-4770 Soest-Meckingsen(DE)

(74) Vertreter: Lange, Gerd, Dipl.-Ing.,
Nachtigallenweg 8 Postfach 2425, D-4950 Minden(DE)

ACTORUM AG

# Beschreibung

Die Erfindung betrifft einen säureauslaufsicheren Akkumulator, bei dem der Raum zwischen den Elektrodenplatten vollständig mit einem Vliesseparator ausgefüllt ist, der aus einem kompressiblen, mikroporösen und kapillarwirkenden Vliesmaterial besteht, das als flexible Bahnware in Rollenform vorgefertigt ist, und der den in der Akkumulatorenzelle vorhandenen Elektrolyten auslaufsicher absorbiert.

Akkumulatoren dieses Types sind aus der DE-OS 3 106 203 bekannt. Das Vliesmaterial besteht z.B. aus Mikroglasfasern, die zu Matten verarbeitet sind und handelsüblich als Bahnware in Rollenform angeboten werden (z.B. AGM=Absorptive Glas Mat der Fa. Evans Products Company, USA).

Hinsichtlich der Anordnung der Vliesseparatoren zwischen den negativen und positiven Elektrodenplatten wird es als wichtig erachtet, daß die Vliesseparatoren vollflächig und mit innigem Kontakt an den Platten anliegen, so daß die Oberflächen der Elektrodenplatten in ihrer Gesamtheit für die elektrochemischen Vorgänge ausreichend mit Elektrolyten versorgt sind. Um diesen Kontakt zu verbessern, werden bei der Herstellung der Akkumulatoren die Plattensätze mit dem dazwischen liegenden Vliesseparatoren stramm, d.h. unter einem gewissen Druck in die Akkumulatorenzellen eingebaut. Das erfordert jedoch eine größere Sorgfalt im Montage- und Fertigungsablauf, da die kompressiblen Vliesseparatoren weder vollflächig noch in örtlichen Teilbereichen zu stark komprimiert werden dürfen, da andernfalls das Elektrolytaufnahmevermögen der Vliesseparatoren vermindert wird oder Kurzschlüsse zwischen den positiven und negativen Elektrodenplatten auftreten können.

Zum Einhalten eines bestimmten Plattenabstandes ist es grundsätzlich bekannt, Abstandshalter zu verwenden. So zeigt z.B. die FR-PS 2 540 674 Abstandshalter, die als knotenartig vorstehende Schlingen aus einem mehrfädigen dicken Fadenstrang gebildet sind, der in einem aus Kett- und Schußfäden bestehenden einlagigen Gewebe-Separator mit eingebunden ist.

Der in der US-PS 4 068 047 beschriebene Separator besteht aus einem flachen Kunststoffrahmen mit Fensteröffnungen, in denen örtlich begrenzt das Vliesmaterial angeordnet ist, und bei denen die Dicke des Rahmens den einzuhaltenden Abstand zwischen den Elektrodenplatten bestimmt.

Aufgabe der Erfindung ist es daher, den Typ des auslaufsicheren Akkumulators mit Vliesseparatoren so zu verbessern, daß er in der Serienfertigung ohne die Notwendigkeit einer erhöhten Sorgfalt im Montage- und Fertigungsablauf herstellbar ist, wobei dennoch die Plattenabstände über die gesamte Fläche der Elektrodenplatten exakt eingehalten werden sollen, und zwar auch im Falle von im Fertigungsablauf verworfenen oder leicht verbogenen Elektrodenplatten, und auch das Heranführen des Elektrolyten an die Plattenoberflächen gewährleistet sein soll.

Diese Aufgabe wird dadurch gelöst, daß bei der Vorfertigung des Vliesmaterials in das Vliesmaterial Abstandshalter in Form von in der Fläche der Bahnware verteilt angeordnete einzelne Stützkörper mit eingebaut sind, und daß weiterhin die Stützkörper Stützflächen aufweisen, die sich zumindest auf einer Seite des Vliesseparators unterhalb der Oberfläche des Separators befinden, wobei der Stützabstand der Stützflächen bis zu 70%, vorzugsweise 20 bis 50%, kleiner ist als die Dicke des unkomprimierten Vliesseparators.

Ein Akkumulator mit den vorgenannten Vliesseparatoren kann problemlos gefertigt werden, und zwar selbst dann, wenn im Fertigungsablauf Elektrodenplatten mit dazwischen liegenden Vliesseparatoren mehrfach übereinander gestapelt werden. Die in das Vliesmaterial integrierten Abstandshalter verhindern das unerwünscht starke Komprimieren des hochporösen Vliesmaterials, wobei eine optimale Kontaktierung zwischen der Pastierungsmasse der Elektrodenplatten und dem Vliesmaterial dann gegeben ist, wenn gemäß einer vorteilhaften Ausgestaltung der Erfindung der Stützabstand der Stützflächen relativ zu der Dicke des unkomprimierten Vliesseparators derart bemessen ist, daß nach dem Komprimieren des Plattensatzes der Vliesseparator mit einem definierten Flächendruck von maximal 80 kg/dm$^2$, vorzugsweise 20 bis 60 kg/dm$^2$ an den Elektrodenplatten anliegt. Dabei werden die vorgeschriebenen Plattenabstände exakt eingehalten.

Dies gilt auch dann, wenn im Fertigungsablauf leicht verbogene oder verworfene Elektrodenplatten verarbeitet werden müssen, die z.B. aufgrund spezieller Bedingungen beim Gießen der Gitterplatten oder beim Formatieren der Platten immer wieder vorkommen. Bisher mußten die verbogenen oder verworfenen Platten mit einem entsprechenden Aufwand aus dem Fertigungsablauf herausgenommen und gerichtet werden, da andernfalls die Gefahr bestand, daß das im Bereich der Verwerfungen oder Verbiegungen zu stark komprimierte Vliesmaterial das Durchwachsen von Bleidendriten von der negativen zur positiven Elektrodenplatte begünstigt und dadurch bereits nach wenigen Arbeitszyklen ein Kurzschluß zwischen den Elektrodenplatten verursachen kann.

Nunmehr ist diese Gefahr beseitigt. Bei der Herstellung eines erfindungsgemäßen Akkumulators werden verworfene oder verbogene Platten beim Stapeln der Plattensätze automatisch durch die in die Vliesseparatoren eingebauten Stützkörper plan gerichtet, so daß die vorgeschriebenen Plattenabstände über die gesamte Fläche der Elektrodenplatten exakt eingehalten werden.

Von besonderer Bedeutung ist dabei, daß sich die mechanisch wirkenden Stützkörper zumindest auf der einen Seite oder bevorzugt auf beiden Seiten nicht direkt an den Elektrodenplatten abstützen, sondern mit ihren Stützflächen innerhalb des Vliesmaterials liegen, so daß zwischen den Stützflächen und den Platten ausreichend Vliesmaterial vorhanden ist, um auch im Bereich der Stützflächen das Heranführen des Elektrolyten an die Plattenoberflächen und eine ausreichende Sauerstoffdiffusion zur negativen Plattenoberfläche zu gewährleisten. Das wird noch dadurch verbessert, wenn gemäß einer vorteilhaften Ausführungsform der Erfindung die Stützkörper aus einem porösen, vorzugsweise hochporösen Material bestehen, wie z.B. aus einem porösen Sinterkörper oder aus porösem Hartschaum.

Aus dem gewährleisteten Heranführen des Elektrolyten an die gesamte Plattenoberflächen ergibt sich in Verbindung mit den exakt eingehaltenen Plattenabständen nun auch die Möglichkeit, säureauslaufsichere Hochleistungsbatterien problemlos herzustellen. Bei Hochleistungsbatterien werden Plattenabstände von nur 0,5 mm angestrebt, die nach der erfindungsgemäßen Lehre zu realisieren sind.

Das Einbauen der Stützkörper in das Vliesmaterial kann z.B. durch Einextrudieren von Kunststoffteilchen oder z.B. durch lokales Einspritzen von Bindemitteln erfolgen, die anschließend in dem Vliesmaterial aushärten. Fertigungstechnisch ist das Einbauen der Stützkörper in das Vliesmaterial dann besonders einfach, wenn akzeptiert wird, daß die Stützflächen der Stützkörper auf der einen Seite des Vliesmaterials bündig in der Oberfläche des Vliesmaterials liegen. In diesem Fall sind die Stützkörper problemlos z.B. bei der Herstellung des Vlies-Bahnmaterials mit einzuschlämmen.

Durch das Einbauen der Stützkörper wird auch die mechanische Belastbarkeit des als Rollenware hergestellten Vliesmaterials entscheidend verbessert. Das Vliesmaterial erhält z.B. durch das Einextrudieren von Kunststoff-Stützkörpern oder das Einspritzen von Bindemittel-Stützkörper eine gewisse Festigkeit, so daß es im Fertigungsablauf besser zu handhaben ist und z.B. beim Abziehen von der Rolle nicht so leicht zerreißt.

Eine besondere vorteilhafte Ausführungsform der Erfindung sieht vor, daß die in das Vliesmaterial eingebauten Stützkörper durch ein in das Vliesmaterial miteingearbeitetes und vorzugsweise sehr dünnes und großmaschiges Netz oder Gittergewebe lagefixiert sind. Dies kann bei der Vorfertigung des Vliesmaterials z.B. dadurch erfolgen, daß das Vlies um ein Netz oder Gittergewebe herumgesponnen wird, in dessen Kreuzungspunkten die Stützkörper angeordnet und mit dem Netz oder Gittergewebe verbunden sind. Derartige in Quer- und Längsrichtung des Vliesmaterials sich erstreckende Netze oder Gittergewebe behindern weder die Sauerstoffdiffusion zur negativen Platte noch das Elektrolytaufnahmevermögen des Vliesseparators, sie haben aber neben der Lagefixierung der Stützkörper zugleich den wesentlichen Vorteil, daß das an sich mechanisch kaum belastbare Vliesmaterial nun doch ausreichende Zugkräfte in der Ebene seiner Flächenerstreckung aufnehmen können. Die Handhabung eines derartig ausgerüsteten Vliesmaterials wird dadurch sehr viel einfacher. Z.B. kann das Vliesmaterial bei der automatischen Fertigung der Akkumulatoren direkt von der Rolle abgezogen werden, ohne daß die Rollen selbst einen aufwendigen und gesteuerten Antrieb benötigen, der bislang als erforderlich angesehen werden mußte, um das Zerreißen des leicht zerstörbaren Vliesmaterials zu verhindern. Nunmehr kann trotz einer zugbelasteten Handhabung des Vliesmaterials bei der Herstellung der Akkumulatoren eine unzerstörte, zusammenhängend geschlossene Struktur des zwischen den Elektrodenplatten eingebrachten Vliesseparatoren gewährleistet werden, die frei von internen Rissen oder Verformungen sind und somit eine hohe Leistung und einen kurzschlußfreien Betrieb der erfindungsgemäßen Akkumulatoren garantieren.

Nachfolgend werden Ausführungsbeispiele der Erfindung anhand der Zeichnungen näher beschrieben. Es zeigen:

Fig. 1 einen Querschnitt durch einen erfindungsgemäßen Akkumulator,

Fig. 2 in perspektivischer Darstellung, teilweise vergrößert, Vliesmaterial zur Verwendung in dem Akkumulator nach Fig. 1.

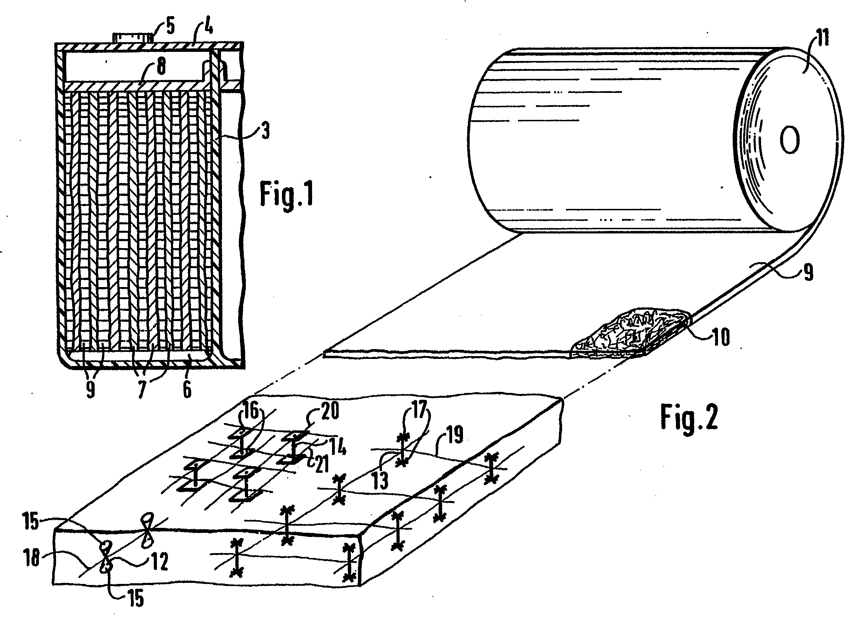

Fig. 1 zeigt den gattungsgemäßen Typ eines säureauslaufsicheren Akkumulators mit dem Zellengefäß 3, das mittels eines Deckels 4 verschlossen ist. In dem Deckel 4 befindet sich der Zellenverschluß 5, z.B. als Überdruckventil.

Dargestellt sind die auf einer Bodenleiste 6 stehenden abwechselnd positiven und negativen Elektrodenplatten 7, wobei die Elektrodenplatten gleicher Polarität in der üblichen Weise mittels einer oberen Stromableitungsschiene 8 zusammengeschaltet sind.

Die Zwischenräume zwischen den Elektrodenplatten 7 sind mit mikroporösen und kapillarwirkenden Vliesseparatoren 9 vollständig ausgefüllt, die den in der Akkumulatorenzelle vorhandenen Elektrolyten absorbieren. Dabei ist die Menge des in der Akkumulatorenzelle vorhandenen Elektrolyten derart bemessen, daß kein freier, nicht absorbierter Elektrolyt in der Zelle vorhanden ist.

Fig. 2 zeigt in perspektivischer Darstellung genauere Einzelheiten des Vliesmaterials 9. Dieses besteht im Grundaufbau aus Mikrofasern 10, die zu einer kompressiblen, mikroporösen und kapillarwirkenden Matte verarbeitet sind. Bei der Fertigung des Akkumulators wird das benötigte Vlies abgezogen, auf das gewünschte Format des Vliesseparators zugeschnitten und bei der Montage der Plattensätze zwischen die einzelnen Elektrodenplatten eingelegt.

Das in Fig. 2 vordere Ende der von der Rolle 11 ablaufenden Bahnware ist vergrößert dargestellt, damit die erfindungsgemäßen Merkmale besser verdeutlicht werden können.

Gemäß der Erfindung sind die zwischen den Elektrodenplatten 7 angeordneten Vliesseparatoren 9 mit Stützkörpern 12, 13 oder 14 ausgerüstet, die bei der Vorfertigung des Vliesmaterials 9 in das Vliesmaterial mit eingebaut sind. Die Stützkörper weisen die Stützflächen 15, 16 oder 17 auf, die sich unterhalb der Oberfläche des Vliesmaterials befinden und eine gewisse Erstreckung in etwa parallel zur Oberfläche des Vliesmaterials haben.

Bei der dargestellten Ausführungsform der Erfindung ist der Stützabstand der Stützflächen 15, 16, 17 voneinander etwa 20 bis 50% kleiner als die Dicke des dargestellten unkomprimierten Vliesmaterials. Wie ersichtlich, liegen damit die Stützflächen der in das Vliesmaterial eingebauten Stützkörper deutlich unter der Oberfläche des Vliesmaterials. Die einzelnen Stützkörper können mit verschie-

ner Formgebung ausgebildet sein, wie dies z.B. anhand der dargestellten Stützkörper 12, 13, 14 demonstriert ist. Die Stützkörper 12 bestehen z.B. aus Kunststoff-Doppelkegeln, deren Basisflächen die Stützflächen 15 bilden. Die weiterhin dargestellten Stützkörper 14 besitzen einen Steg mit Endplatten 16, die die Stützflächen bilden. Bei den Stützkörpern 13 sind die Stützflächen durch Querstege in Kreuzform gebildet.

Die Darstellung gemäß Fig. 2 läßt auch erkennen, daß die einzelnen Stützkörper innerhalb des Vliesmaterials miteinander verbunden sind. Bei dem dargestellten Ausführungsbeispiel erfolgt dies mittels sehr dünner Fäden, z.B. aus einem säurebeständigen Kunststoff. Es können aber auch Glasfasern o.dgl. benutzt werden.

Die Fäden, die zu einem Netz oder Gittergewebe verknüpft sind, fixieren die Lage der einzelnen Stützkörper innerhalb des Vliesmaterials und haben zudem den Vorteil, die mechanische Festigkeit des Vliesmaterials entscheidend zu erhöhen.

Bei dem dargestellten Ausführungsbeispiel sind die Stützkörper 12 auf einem Faden 18 aufgereiht, der bei der Vorfertigung des Vliesmaterials 9 mit eingesponnen wird.

Die Stützkörper 13 sind durch ein sehr feines und großmaschiges Gitternetz 19 lagefixiert. Das Gitternetz 19 vermag Zugkräfte in unterschiedlichen Richtungen, d.h. in der Ebene der Flächenerstreckung der Bahnware des Vliesmaterials 9 aufzunehmen.

Die Stützkörper 14 sind mit einem doppelten Gitternetz 20 und 21 lagefixiert. Es ist ohne weiteres verständlich, daß ein doppeltes Gitternetz erhöhten Zugbelastungen standhält, so daß beim Abziehen des Vliesmaterials von der Rolle 11 unerwünschte Verformungen, Zerreißen oder interne Risse in dem Vliesmaterial in keinem Fall auftreten können.

Das vorstehend anhand von Fig. 2 im Detail beschriebene Vliesmaterial wird ohne die Notwendigkeit weiterer Bearbeitungen bei der Herstellung des Akkumulators gemäß Fig. 1 zwischen den Elektrodenplatten 7 angeordnet und gewährleistet die Einhaltung des geforderten Plattenabstandes, ggf. auch das plane Ausrichten verbogener oder verworfener Elektrodenplatten sowie hervorragende elektrochemische Werte, so daß nach der Lehre der Erfindung auch säureauslaufsichere Hochleistungsbatterien gefertigt werden können, die im Bedarfsfall auch mit liegenden Elektrodenplatten größerer Dimension herstellbar sind.

## Patentansprüche

1. Säureauslaufsicherer Akkumulator
- bei dem der Raum zwischen den Elektrodenplatten vollständig mit einem Vliesseparator ausgefüllt ist,
- der aus einem kompressiblen, mikroporösen und kapillar wirkenden Vliesmaterial besteht, das als flexible Bahnware in Rollenform vorgefertigt ist,
- und der den in der Akkumulatorenzelle vorhandenen Elektrolyten auslaufsicher absorbiert,
dadurch gekennzeichnet,
- daß bei der Vorfertigung des Vliesmaterials (9) in das Vliesmaterial Abstandshalter in Form von in der Fläche der Bahnware verteilt angeordnete einzelne Stützkörper (12, 13, 14) mit eingebaut sind,
- daß die Stützkörper Stützflächen (15, 16, 17) aufweisen, die sich zumindest auf einer Seite des Vliesseparators unterhalb der Oberfläche des Separators befinden,
- und daß der Stützabstand der Stützflächen bis zu 70%, vorzugsweise 20 bis 50%, kleiner ist als die Dicke des unkomprimierten Vliesseparators.

2. Akkumulator nach Anspruch 1, dadurch gekennzeichnet
- daß die Stützkörper (13, 14) durch ein in das Vliesmaterial eingearbeitetes, vorzugsweise sehr dünnes und großmaschiges Netz (19, 20) oder Gittergewebe lagefixiert sind.

3. Akkumulator nach Anspruch 1 oder 2, dadurch gekennzeichnet
- daß die Stützkörper aus einem porösen, vorzugsweise hochporösen Material bestehen.

4. Akkumulator nach einem der Ansprüche 1 – 3, dadurch gekennzeichnet
- daß der Stützabstand der Stützflächen relativ zu der Dicke des unkomprimierten Vliesseparators derart bemessen ist, daß nach dem Komprimieren des Plattensatzes der Vliesseparator mit einem definierten Flächendruck von maximal 80 kg/dm², vorzugsweise 20 kg/dm² bis 60 kg/dm² an den Elektrodenplatten anliegt.

## Claims

1. A storage battery that is protected against the discharge of acid
- with a fleece separator that completely fills the space between the electrode plates
- said fleece separator consisting of a compressible, microporous and capillary fleece material which is prefabricated as flexible strip good in rolled form,
- and that absorbs the electrolyte which is present in the storage battery in a discharge-protected manner,
characterized in that
- a plurality of individual spacer elements (12, 13, 14) are embedded in the fleece material (9) during the preliminary production thereof and said spacers are disposed in distribution over the area of the strip good,
- the spacers each having support surfaces (15, 16, 17) which are situated at least on one side of the fleece separator below the surface of said separator,
- and that the spacing between the opposite support surface is up to 70% or preferably 20% to 50% less than the thickness of the fleece separator in an uncompressed state.

2. A storage battery according to claim 1 characterized in that
- the spacers (13, 14) are fixed in position by a preferably very thin and wide mesh net (19, 20) or screen that is worked into the fleece material.

3. A storage battery according to claim 1 or 2, characterized in that
- the spacers consist of a porous and preferably highly porous material.

4. A storage battery according to one of the claims 1 to 3 characterized in that
— the spacing of the opposite support surface is dimensioned, relative to the thickness of the uncompressed fleece separator, in such a manner that, after the plate set has been compressed, the fleece separator contacts the electrode plates with a defined surface pressure of maximally 80 kg/dm2 but preferably 20 kg/dm2 to 60 kg/dm2.

## Revendications

1. Accumulateur protégé contre les débordements d'acide,
— dans lequel l'espace entre les plaques d'électrode est complètement rempli par un matelas de séparation qui est constitué d'un matériau pour matelas, compressible, microporeux et à effet capillaire, préfabriqué sous la forme d'un rouleau de bande flexible,
— ce matériau absorbant d'une façon évitant tout débordement les électrolytes présents dans la cellule d'accumulateur,
caractérisé en ce que
— au cours de la préfabrication du matériau pour matelas (9) sont intégrés dans le matériau des cales d'écartement sous la forme de corps de supports individuels (12, 13, 14) répartis sur la surface de la bande,
— en ce que les corps de support présentent des surfaces de support (15, 16, 17) qui se trouvent au moins sur une face du matelas de séparation en dessous de la surface supérieure du séparateur,
— et en ce que la distance d'appui des surfaces d'appui est inférieure de 70% au plus, de préférence de 20 à 50%, à l'épaisseur du matelas de séparation non comprimé.

2. Accumulateur selon la revendication 1, caractérisé en ce que les corps de support (13, 14) sont maintenus en position à l'aide d'un filet (19, 20) ou d'un tissu à mailles inséré dans le matériau pour matelas et qui est de préférence très fin et à grosses mailles.

3. Accumulateur selon la revendication 1 ou 2, caractérisé en ce que les corps de support sont constitués d'un matériau poreux, de préférence à grande porosité.

4. Accumulateur selon l'une des revendications 1 à 3, caractérisé en ce que la distance de support des surfaces de support par rapport à l'épaisseur du matelas de séparation est déterminée de telle façon qu'après la compression du jeu de plaques, le matelas de séparation vienne en appui sur les plaques d'électrode sous une pression définie maximale de 80 kg/dm2, de préférence de 20 à 60 kg/dm2.

Fig.1

Fig.2

EP 0 228 566 B1